# FASCICULE DE BREVET EUROPEEN

(11) **EP 0 443 283 B1**
(45) Date de publication et mention de la délivrance du brevet: **13.07.1994**
(21) Numéro de dépôt: 90403775.1
(22) Date de dépôt: 27.12.1990
(51) Int. Cl.: G05D 16/10

(54) **Détendeur**
Druckminderer
Pressure reducing device

(30) Priorité: 22.02.1990 FR 9002199
(43) Date de publication de la demande: 28.08.1991
(73) Titulaire: LA SOUDURE AUTOGENE FRANCAISE, F-75007 Paris (FR); L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Lasnier, Didier, F-95000 Cergy (FR); Beaco, Bruno, I-37122 Verona (IT); Sakreiter, Daniel, F-95650 Montgeroult p. Boissy L'Aillerie (FR)
(74) Mandataire: Le Moenner, Gabriel

(56) Documents cités:
- DE-A- 2 545 612
- FR-A- 2 101 569
- FR-A- 2 233 656
- US-A- 3 937 243

## Description

La présente invention a pour objet des détendeurs du type industriel, comprenant, dans un corps, un clapet de régulation déplaçables suivant un axe dans un premier alésage et sollicité par un premier ressort pour coopérer avec un siège entre une chambre haute pression et une chambre basse pression, et couplé à une paroi mobile déplaçable suivant l'axe, délimitant d'un côté la chambre basse pression et sollicitée par un second ressort tarable manuellement dans la direction tendant à écarter le clapet de son siège, un passage d'amenée de gaz haute pression à la chambre haute pression, un passage de sortie de gaz basse pression communiquant avec la chambre basse pression, et des moyens pour monter au moins un manomètre sur le corps, en communication avec la chambre haute pression.

Dans les détendeurs classiques de ce type tel que décrit dans le document FR-A-2 233 656, le corps de détendeur est formé avec un grand nombre d'alésages, à savoir un alésage de moyen diamètre formant logement pour le clapet de régulation, un alésage de grand diamètre formant la chambre basse pression, un alésage de petit diamètre, coaxial aux précédents, formant la liaison entre les chambres haute pression et basse pression, deux alésages pour le passage d'entrée, deux alésages pour le passage de sortie, ainsi que deux alésages supplémentaires pour le montage d'un manomètre haute pression et d'un manomètre basse pression, et encore un alésage supplémentaire pour le montage d'un clapet de surpression communiquant avec la chambre haute pression. D'autre part, l'alésage de moyen diamètre recevant le clapet de régulation est fermé par un bouchon formant appui pour le premier ressort de sollicitation du clapet, dans un agencement ne permettant pas de garantir des interventions des opérateurs sur le clapet de régulation, non plus d'ailleurs que sur le clapet de surpression.

La présente invention a pour objet de proposer un nouveau détendeur de type industriel de conception grandement simplifiée, limitant le nombre des usinages pour faciliter ainsi une production automatisée en grande série à moindres coûts, garantissant une fiabilité et une sécurité accrues, et intégrant la notion de modularité permettant une grande souplesse d'utilisation pour différents types de détendeurs selon leur environnement et permettant une fabrication suivant le concept du "juste à temps".

Pour ce faire, selon une caractéristique de l'invention, l'extrémité extérieure du premier alésage est conformée pour recevoir un moyen de raccord de manomètre pour le montage, dans l'axe, du manomètre et formant appui pour le premier ressort de sollicitation du clapet de régulation.

Selon une autre caractéristique de l'invention, un second et un troisième alésages sont formés coaxialement dans le corps, orthogonalement à l'axe, et sont destinés à recevoir un moyen de raccord d'entrée et un moyen de raccord de sortie formant une portion du passage d'entrée et une portion du passage de sortie, respectivement.

Selon encore une autre caractéristique de l'invention, la paroi mobile est constituée d'un piston coulissant dans un quatrième alésage de grand diamètre du corps, le clapet taré de surpression étant avantageusement monté dans une partie de moyeu tubulaire du piston formant siège pour le clapet de surpression.

D'autres caractéristiques et avantages de la présente invention ressortiront de la description suivante d'un mode de réalisation, donné à titre illustratif mais nullement limitatif, faite en relation avec les dessins annexés, sur lesquels :
- la figure 1 est une vue en coupe schématique d'un détendeur selon l'invention dans la configuration détendeur à deux manomètres ; et
- les figures 2 à 4 représentent, à titre indicatif, d'autres configurations de détendeurs illustrant le caractère modulaire du détendeur selon l'invention.

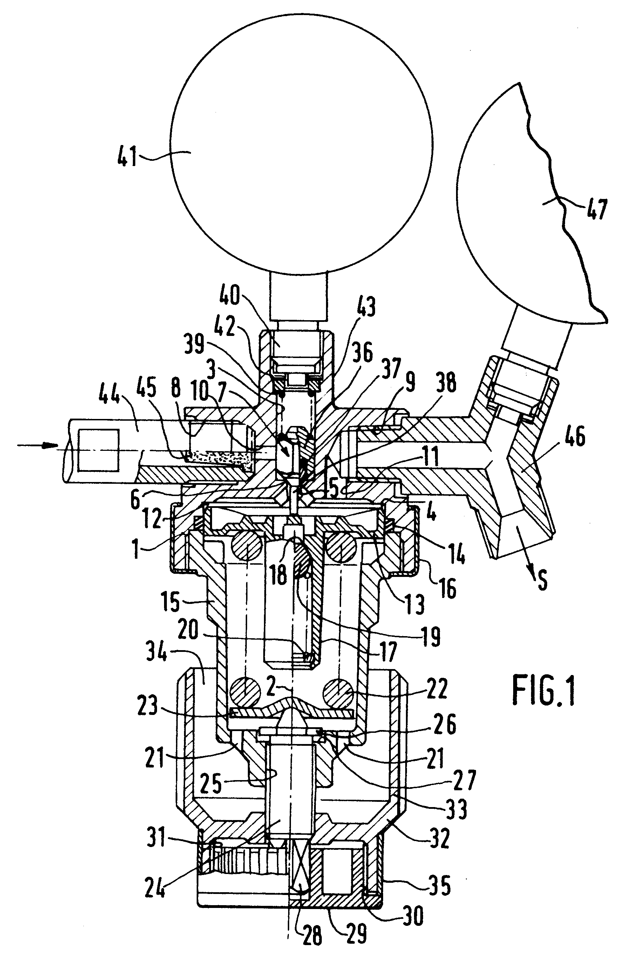

Comme représenté sur la figure 1, le détendeur comporte un corps (1), réalisé typiquement en fonderie d'alliage léger, comportant, suivant un axe principal (2), trois alésages coaxiaux, à savoir un alésage de moyen diamètre (3) débouchant vers le haut du corps, un alésage de grand diamètre (4) débouchant vers le bas du corps et un alésage étagé de petit diamètre (5) établissant la communication entre les alésages (3) et (4) et formant, à sa partie supérieure, un siège (6) pour un corps de clapet (7) monté à coulissement dans l'alésage (3).

Dans le corps (1) sont formés, en vis-à-vis, coaxialement l'un avec l'autre et orthogonalement à l'axe principal (2), deux alésages (8) et (9) communiquant, respectivement, via un petit alésage transversal (10) et via un alésage axial (11), avec l'alésage (3) et la partie supérieure formant une chambre de basse pression (12) de l'alésage (4). Dans l'alésage (4) est monté à coulissement un piston (13), en alliage léger ou en matériau plastique à haute tenue mécanique, par exemple en polyamide, étanchéifié par un joint torique (14) porté par le corps (1) et bloqué en position par un couvercle en forme de cloche (15) abritant le piston (13) et rapporté sur le corps (1). Une bague (16) est sertie autour du corps (1) et du couvercle (15) pour garantir l'inviolabilité de la liaison entre le corps (1) et le couvercle (15). Le piston (13) comporte une partie de moyeu tubulaire s'étendant vers le bas (17) définissant un logement intérieur communiquant avec la chambre basse pression (12) par un passage formant siège (18) pour un clapet bille (19) sollicité vers le siège (18) par un ressort (20) prenant appui sur une bague emmanchée dans l'extrémité inférieure de la partie formant moyeu (17), cet ensemble constituant un clapet de surpression ou de sécurité entre la chambre basse pression (12) et l'atmosphère via des passages (21) formés dans la tête du couvercle (15).

Le piston (13) est sollicité dans la direction tendant à réduire le volume de la chambre basse pression (12) par un fort ressort (22) logé dans le couvercle (15) et prenant appui sur une plaque (23) portant en articulation sur l'extrémité intérieure d'une vis de réglage (24) coopérant avec un taraudage (25) formé dans la tête du couvercle (15). L'extrémité intérieure de la vis (24) comporte une collerette (26) susceptible de coopérer avec un épaulement interne (27) formé dans la tête du couvercle (15) de façon à éviter un échappement vers l'extérieur de la vis (24). L'extrémité extérieure (28) de la vis (24) est formée avec des pans pour le montage à force dans un alésage centrale d'un bouchon (29), réalisé typiquement en matériau plastique à haute densité, comportant une couronne dentée externe (30) destinée à coopérer en emmanchement avec indexation avec une couronne dentée interne (31) d'un bouchon annulaire (32) formant organe de réglage manuel de l'effort du ressort (22) et comportant une jupe s'étendant vers le haut (33) entourant partiellement le couvercle (15) et formant un passage annulaire (34) rabattant vers le haut, conformément aux normes en vigueur, le gaz s'échappant par les passages (21) en cas d'ouverture du clapet de surpression (19) pour limiter la pression dans la chambre basse pression (12). Une bague de marquage (35) est sertie autour de la partie inférieure du bouchon (32).

Conformément à un aspect de l'invention, le clapet de régulation (7) comporte un corps de clapet à pans (36) monté à coulissement juste dans l'alésage (3) et comportant, dans sa partie inférieure, un logement étagé dans lequel est montée une garniture annulaire en matériau polymère compatible avec les gaz véhiculés (37) dans laquelle est emmanchée à force une tige axiale (38) établissant une liaison mécanique entre le corps de clapet (7) et le piston (13). La forme tronconique de la garniture (37) assure une meilleure étanchéité en coopération avec le siège (6) et élimine la tendance à voir des particules indésirables ou copeaux se coincer au niveau du siège (6). Le montage à emmanchement de la tige (38) dans la garniture (37) assure un positionnement et une solidarisation parfaite de la garniture dans le corps de clapet (7). Le corps de clapet (7) est sollicité dans la direction vers le siège (6) par un ressort (39).

Selon un aspect particulier de l'invention, l'extrémité supérieure de l'alésage (3) est conformée de façon à recevoir un moyen de raccord (40) d'un manomètre haute pression (41) disposé ainsi dans l'axe du détendeur. Le moyen de raccord (40) coopère, via une rondelle d'étanchéité et de positionnement (42), avec une rondelle métallique (43) percée d'un orifice central formant filtre, emmanchée à demeure dans l'alésage (3) et formant ainsi butée non seulement pour le moyen de raccord (40) du manomètre (41) mais également pour le ressort (39) de sollicitation du corps de clapet (7).

Selon un aspect avantageux de l'invention, l'aménagement en vis-à-vis des alésages (8) et (9), qui peuvent être réalisés simplement et très rapidement par des moyens de production automatisés, permet l'adjonction au détendeur d'une diversité de moyens de raccords d'entrée (44) établissant la communication avec la chambre haute pression constituée par l'alésage (3), et de moyens de raccords de sortie (46) permettant le couplage aval du détendeur avec un circuit où d'autres composants de circuit basse pression. Typiquement, le moyen de raccord d'entrée (44) est pourvu d'un filtre intégré (45), ce qui évite de prévoir des moyens de montage d'un tel filtre dans le corps du détendeur lui-même. Dans l'exemple représenté sur la figure 1, le moyen de raccord de sortie (46) est du type en Y permettant le raccordement à un circuit de sortie, comme figuré en 5, et le montage, à l'extérieur du corps (1), d'un manomètre basse pression (47).

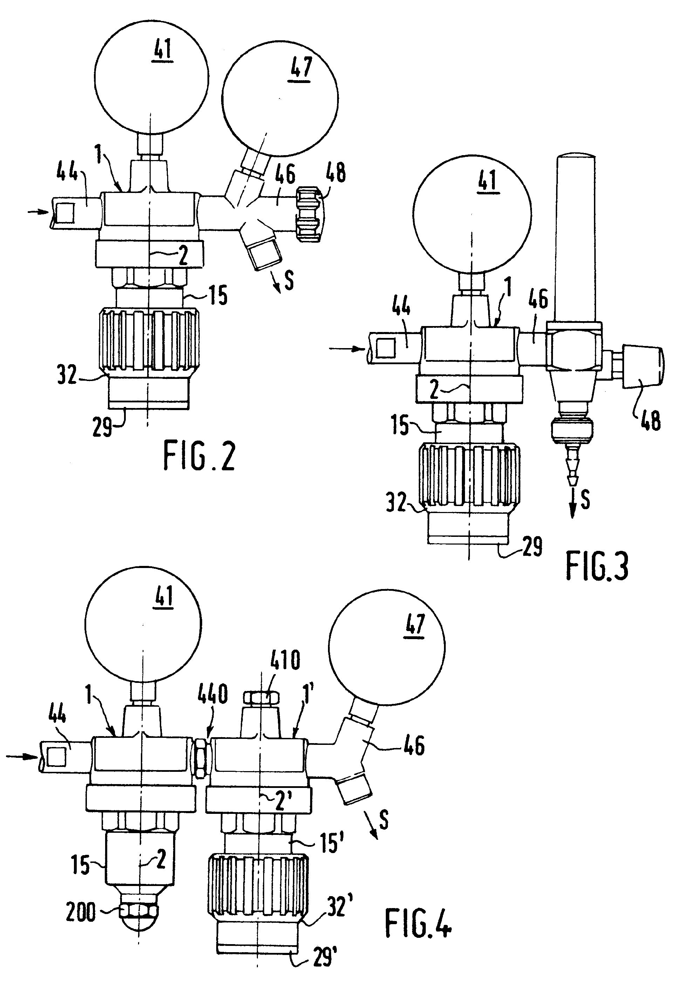

La modularité du détendeur selon l'invention est clairement mise en évidence par les variantes représentées schématiquement sur les figures 2 à 4 qui représentent, respectivement :
- la figure 2, un détendeur à double manomètre du type précedemment décrit, avec en outre, monté axialement dans le raccord de sortie (46), un robinet manuel (48) pour moduler ou interrompre l'écoulement aval (S) de gaz.
- la figure 3 un détendeur de type dit débitlitre ; et
- la figure 4, un détendeur double détente utilisant en série deux détendeurs du type décrit précedemment, le manomètre haute pression (41) étant monté sur le premier corps de détendeur (1) comportant un simple bouchon (290), le manomètre basse pression (47) étant monté sur le moyen de raccord de sortie (46) rapporté sur le second corps de détendeur (1′) où le manomètre basse pression est ici remplacé par un simple bouchon (410), la liaison entre les deux corps de détendeurs (1) et (1′) étant assurée par un raccord à double filetage (440) formant à la fois un moyen de raccord de sortie du premier corps (1) et moyen de raccord d'entrée du second corps de détendeur (1′).

Quoique la présente invention ait été décrite en relation avec des modes de réalisation particuliers, elle ne s'en trouve pas limitée mais est au contraire susceptible de modifications et de variantes qui apparaîtront à l'homme de l'art.

## Revendications

1. Détendeur comprenant, dans un corps (1), un clapet de régulation (7) déplaçable suivant un axe (2) dans un premier alésage (3) et sollicité par un premier ressort (39) en coopération avec un siège (6) entre une chambre haute pression et une chambre basse pression (12) et couplé (38) à une paroi mobile (13) déplaçable suivant l'axe (2), délimitant d'un côté la chambre basse pression et sollicitée par un second ressort (22) tarable manuellement dans la direction tendant à écarter le clapet (7) de son siège (6), un passage d'amenée (10) de gaz haute pression à la chambre haute pression, un passage de sortie (11) de gaz basse pression communiquant avec la chambre basse pression (12), et des moyens pour monter au moins un manomètre (41) sur le corps (1), en communication avec la chambre haute pression (3), caractérisé en ce que l'extrémité extérieure du premier alésage (3) est conformée pour recevoir un moyen de raccord (40) de manomètre pour le montage, dans l'axe (2), du manomètre (41) et formant appui pour le premier ressort (39) de sollicitation du clapet de régulation (7).

2. Détendeur selon la revendication 1, caractérisé en ce qu'il comporte un second (8) et un troisième (9) alésages formés coaxialement dans le corps (1), orthogonalement à l'axe (2), et destinés à recevoir un moyen de raccord d'entrée (44) et un moyen de raccord de sortie (46) formant une portion du passage d'entrée et une portion du passage de sortie, respectivement.

3. Détendeur selon la revendication 1 ou la revendication 2, caractérisé en ce que la paroi mobile est constituée d'un piston (13) coulissant dans un quatrième alésage (4) du corps (1).

4. Détendeur selon la revendication 3, comportant au moins un clapet taré de surpression (19) communiquant avec la chambre basse pression (12), caractérisé en ce que le clapet taré de surpression (19) est monté dans une partie de moyeu tubulaire (17) du piston (13) formant siège (18) pour le clapet de surpression (19).

5. Détendeur selon l'une des revendication 1 à 4, comportant une tige de couplage (38) entre le clapet de régulation (7) et la paroi mobile (13), caractérisé en ce que le clapet de régulation (7) comporte une garniture annulaire conique (37) montée dans le corps de clapet (36) et dans laquelle est emmanchée la tige de couplage (38).

6. Détendeur selon l'une des revendications précédentes, comportant une vis (24) de réglage de l'effort du second ressort (22) montée dans un couvercle (15) solidaire du corps (1), et un organe d'actionnement manuel de la vis de réglage, caractérisé en ce que la vis de réglage (24) comporte, à son extrémité intérieure, une collerette (26) susceptible de coopérer avec un épaulement interne (27) du couvercle (15) et, à son extrémité extérieure, au moins un pan (28) pour le montage à emmanchement de l'organe d'actionnement (29-32).

7. Détendeur selon la revendication 6, caractérisé en ce que l'organe d'actionnement comprend une poignée tubulaire (32,33) comportant une couronne dentée intérieure (31) et un moyeu (29) emmanché sur l'extrémité extérieure (28) de la vis de réglage (24) et comportant une couronne dentée extérieure (30) pour son montage à emmanchement indexé dans la poignée (32,33).

8. Détendeur selon l'une des revendications 2 à 7, caractérisé en ce que le moyen de raccord de sortie (46) forme un embranchement pour le montage d'un manomètre de basse pression (47) et le raccordement (S) à une canalisation d'utilisation.

9. Détendeur selon l'une des revendications 2 à 8, caractérisé en ce que le moyen de raccord d'entrée (44) comporte un filtre intégré (45).

10. Détendeur selon l'une des revendications 1 à 9, caractérisé en que le moyen de raccord de manomètre (40) comporte une rondelle filtre (43) emmanchée dans le premier alésage (3) et formant appui pour le premier ressort (39) de sollicitation du clapet de régulation (7).

## Claims

1. Regulator comprising, in a body (1), a regulating valve (7) which can be displaced along an axis (2) in a first bore (3) and urged by a first spring (39) in interaction with a seat (6) between a high-pressure chamber and a low-pressure chamber (12), and coupled (38) to a movable wall (13) which can be displaced along the axis (2), delimiting, on the one side, the low-pressure chamber and urged by a second spring (22) which can be preloaded manually in the direction tending to move the valve (7) away from its seat (6), a passage (10) for conveying high-pressure gas to the high-pressure chamber, an outlet passage (11) for low-pressure gas communicating with the low-pressure chamber (12), and means for mounting at least one manometer (41) on the body (1) in communication with the high-pressure chamber, characterized in that the outer end of the first bore (3) is shaped to receive a means (40) for connecting a manometer for mounting the manometer (41) along the axis (2) and forming a support for the first spring (39) for urging the regulating valve (7).

2. Regulator according to Claim 1, characterized in that it includes a second bore (8) and a third bore (9) which are formed coaxially in the body (1), orthogonally to the axis (2), and which are intended to receive an inlet connection means (44) and an outlet connection means (46) forming a portion of the inlet passage and a portion of the outlet passage, respectively.

3. Regulator according to Claim 1 or Claim 2, characterized in that the movable wall consists of a piston (13) sliding in a fourth bore (4) in the body (1).

4. Regulator according to Claim 3, including at least one preloaded pressure-relief valve (19) communicating with the low-pressure chamber (12), characterized in that the preloaded pressure-relief valve (19) is mounted in a tubular hub part (17) of the piston (13) forming a seat (18) for the pressure-relief valve (19).

5. Regulator according to one of Claims 1 to 4, including a link rod (38) between the regulating valve (7) and the movable wall (13), characterized in that the regulating valve (7) includes a conical annular gasket (37) mounted in the valve body (36) and into which the link rod (38) is tightly fitted.

6. Regulator according to one of the preceding claims, including a screw (24) for adjusting the load on the second spring (22), the screw being mounted in a cover (15) secured to the body (1), and a member for manually actuating the adjusting screw, characterized in that the adjusting screw (24) includes, at its inner end, a collar (26) capable of interacting with an internal shoulder (27) on the cover (15) and, at its outer end, at least one flat (28) for tightly fitting the actuating member (29-32).

7. Regulator according to Claim 6, characterized in that the actuating member comprises a tubular handle (32, 33) including an internally toothed ring (31) and a hub (29) tightly fitted onto the outer end (28) of the adjusting screw (24) and including an externally toothed ring (30) for indexed tight fitting thereof into the knob (32, 33).

8. Regulator according to one of Claims 2 to 7, characterized in that the outlet connection means (46) forms a branching for mounting a low-pressure manometer (47) and connection (S) to a user pipeline.

9. Regulator according to one of Claims 2 to 8, characterized in that the inlet connection means (44) includes a built-in filter (45).

10. Regulator according to one of Claims 1 to 9, characterized in that the manometer connection means (40) includes a filter washer (43) tightly fitted into the first bore (3) and forming a support for the first spring (39) for urging the regulating valve (37).

## Patentansprüche

1. Druckminderer mit einem in einem Gehäuse vorgesehenen Ventilorgan (7), das entlang einer Achse (2) in einer ersten Bohrung (3) verschiebbar ist und durch eine erste Feder (39) gegen einen Sitz (6) zwischen einer Hochdruckkammer und einer Niederdruckkammer (12), mit diesem zusammenwirkend, vorgespannt und mit einer beweglichen Wand (13) verbunden (38) ist, die entlang der Achse (2) verschiebbar ist, die an einer Seite die Niederdruckkammer begrenzt und durch eine manuell austarierbare zweite Feder (22) in die Richtung vorgespannt ist, in der das Ventilorgan (7) von seinem Sitz (6) abgehoben wird, mit einem Einlaß (10) für unter hohem Druck stehendes Gas in die Hochdruckkammer, mit einem mit der Niederdruckkammer (12) kommunizierenden Auslaß (11) für unter niederem Druck stehendes Gas, und mit einer Einrichtung zur Montage zumindest eines mit der Hochdruckkammer kommunizierenden Manometers (41) auf dem Gehäuse (1), dadurch gekennzeichnet, daß das Außenende der ersten Bohrung (3) zur Aufnahme einer Manometeranschlußeinrichtung (40) für die Montage des Manometers (41) auf der Achse (2) ausgebildet ist und ein Widerlager für die erste Feder (39) zur Vorspannung des Ventilorgans (7) bildet.

2. Druckminderer nach Anspruch 1, dadurch gekennzeichnet, daß er eine zweite Bohrung (8) und eine dritte Bohrung (9) umfaßt, die rechtwinklig zur Achse (2) in dem Gehäuse (1) koaxial ausgebildet und dazu bestimmt sind, eine Einlaßanschlußeinrichtung (44) und eine Auslaßanschlußeinrichtung (46) aufzunehmen, die einen Teil des Einlasses bzw. einen Teil des Auslasses bilden.

3. Druckminderer nach Anspruch 1 oder 2, dadurch gekennzeichnet, daß die bewegliche Wand von einem Kolben (13) gebildet ist, der in einer vierten Bohrung (4) des Gehäuses gleitet.

4. Druckminderer nach Anspruch 3, mit zumindest einem geeichten Überdruckventil (19), das mit der Niederdruckkammer kommuniziert, dadurch gekennzeichnet, daß das geeichte Überdruckventil (19) in einem rohrförmigen Nabenbereich (17) eines Kolbens (13) angebracht ist, der einen Sitz (18) für das Überdruckventil (19) bildet.

5. Druckminderer nach einem der Ansprüche 1 bis 4, mit einer Kupplungsstange (38) zwischen dem Ventilorgan (7) und der beweglichen Wand (13), dadurch gekennzeichnet, daß das Ventilorgan (7) eine konische Ringdichtung (37) umfaßt, die im Ventilorgan (36) angeordnet ist, und in der die Kupplungsstange (38) eingesetzt ist.

6. Druckminderer nach einem der vorangehenden Ansprüche mit einer in einem fest mit dem Gehäuse (1) verbundenen Deckel (15) angebrachten Schraube (24) zur Einstellung der Spannung der zweiten Feder (22) und einem Organ zur manuellen Betätigung der Stellschraube, dadurch gekennzeichnet, daß die Stellschraube (24) an ihrem innen gelegenen Ende einen Kragen (26), der dazu ausgelegt ist, mit einer innen liegenden Schulter (27) des Deckels (15) zusammenzuwirken, und an ihrem außen liegenden Ende zumindest einen Vierkant (28) zur Steckmontage des Betätigungsorgans (29 - 32) umfaßt.

7. Druckminderer nach Anspruch 6, dadurch gekennzeichnet, daß das Betätigungsorgan einen rohrförmigen Griff (32, 33) umfaßt, der einen Innenzahnkranz (31) und eine Nabe (29) umfaßt, die auf das Außenende (28) der Stellschraube (24) gesteckt ist und einen Außenzahnkranz (30) zum ausgerichteten Eingriff in den Handgriff (32, 33) umfaßt.

8. Druckminderer nach einem der Ansprüche 2 bis 7, dadurch gekennzeichnet, daß die Auslaßanschlußeinrichtung (46) eine Abzweigung für die Montage eines Niederdruck-Manometers (47) und den Anschluß (S) an eine Versorgungsleitung bildet.

9. Druckminderer nach einem der Ansprüche 2 bis 8, dadurch gekennzeichnet, daß die Einlaßanschlußeinrichtung (44) ein integriertes Filter (45) umfaßt.

10. Druckminderer nach einem der Ansprüche 1 bis 9, dadurch gekennzeichnet, daß die Manometeranschlußeinrichtung (40) einen Filterring (43) umfaßt, der in die ersten Bohrung (3) eingesetzt ist und ein Widerlager für die erste Feder (39) zur Belastung des Ventilorgans (7) bildet.
